# EUROPÄISCHE PATENTSCHRIFT

(11) **EP 2 871 390 B1**
(45) Veröffentlichungstag und Bekanntmachung des Hinweises auf die Patenterteilung: **02.08.2017**
(21) Anmeldenummer: 14003685.6
(22) Anmeldetag: 31.10.2014
(51) Int. Cl.: F16J 15/06, F16J 15/10, F16J 15/12, F16J 15/16

(54) **Dichtungsmittel und Dichtungssystem**
Sealant and sealing system
Moyen d'étanchéification et système d'étanchéification

(30) Priorität: 12.11.2013 DE 102013018951
(43) Veröffentlichungstag der Anmeldung: 13.05.2015
(73) Patentinhaber: Westinghouse Electric Germany GmbH, 68167 Mannheim (DE)
(72) Erfinder: Dichtl, Johann, 86153 Augsburg (DE); Möhring, Dirk, 68309 Mannheim (DE)
(74) Vertreter: Eickmeyer, Dietmar

(56) Entgegenhaltungen:
- US-A1- 2006 125 188
- US-A1- 2006 272 321

## Beschreibung

Die Erfindung betrifft ein Dichtungsmittel und ein Dichtungssystem, umfassend ein erstes und ein zweites Bauteil, welche in einem gemeinsamen Abdichtbereich durch einen Dichtspalt voneinander getrennt sind, wobei wenigstens eine nutähnliche Vertiefung in wenigstens einem der beiden Bauteile vorgesehen ist, welche in den Dichtspalt übergeht.

Es ist allgemein bekannt, dass in kerntechnischen Anlagen aufgrund der dort herrschenden hohen Sicherheitsanforderungen sicherzustellen ist, dass unter keinen Umständen radioaktives Material austritt, welches eine Gefährdung für das Bedienpersonal oder die Umwelt darstellt. Wesentliche Komponenten sind hierbei unter anderem Dichtungen, welche abhängig von den jeweils herrschenden sie umgebenden Betriebsbedingungen ein Abdichten bewirken. Hierdurch können eventuelle Leckagen schnell und sicher geschlossen werde. Im Falle eines unerwarteten Überdrucks kann eine solche Dichtung aber auch als Ablassventil fungieren, um den Überdruck kontrolliert abzubauen.

Ein Anwendungsgebiet einer solchen Dichtung ist beispielsweise die Notfalldichtung für die Hauptkühlmittelpumpen im Primärkreislauf von Kernkraftwerken. Bei Druckwasserreaktoren steht der Primärkreis bei Betrieb unter sehr hohem Innendruck (ca. 150 bar). Eine Leckage im Spalt zwischen der Pumpenwelle und dem Pumpengehäuse wird im Betrieb durch die Siegelwasserpumpen verhindert, die aktiv einen Überdruck zum Primärkreis halten. Bei Störfällen muss davon ausgegangen werden, dass für die Siegelwasserpumpen kein Strom zur Verfügung steht. In diesem Fall würde sich der Primärkreis ungehindert über den Spalt zwischen Pumpenwelle und - gehäuse entleeren und radioaktives Kühlmittel würde ungehindert austreten.

Gemäß dem Stand der Technik wird in einem solchen Fall der Spalt durch ein bewegliches Dichtelement beziehungsweise Dichtungsmittel verschlossen, welches durch einen davon getrennten mechanischen Aktuator in diesen hinein bewegt wird. Als nachteilig erweist sich hierbei, dass eine derartige Konstruktion sehr aufwändig ist und zudem zunächst ein sicheres Ansteuerungskriterium für den Aktuator zu ermitteln ist. Durch die Mehrzahl an Bauelementen beziehungsweise Verfahrensschritten zum Abdichten des Spaltes besteht zudem eine - wenn auch sehr geringe - erhöhte Restwahrscheinlichkeit, dass eine Komponente beziehungsweise ein Teilschritt versagen und damit der Spalt nicht sicher geschlossen wird.

*In der Patentschrift* US2006/0125188 A1 *ist eine Dichtung für Türen und Hauben von Automobilkarosserien offenbart, welche zur Steigerung der Dichtwirkung ein thermisch abhängiges Expansionsverhalten aufweist.*

*In der Patentschrift* US2006/027321 A1 *ist ein Abdichtungssystem für ein Abgasrohr eines Verbrennungsmotors offenbart, welches auch bei sehr hohen Betriebstemperaturen ein sicheres Abdichten ermöglicht.*

Aufgabe der Erfindung ist es daher, ein Dichtungsmittel beziehungsweise Dichtungssystem für den Einsatz in kerntechnischen Anlagen bereitzustellen, welches besonders wenige Komponenten erfordert und welches besonders sicher funktioniert.

Diese Aufgabe wird gelöst durch ein erfindungsgemäßes Dichtungsmittel. Dieses ist gekennzeichnet durch einen hüllenähnlichen verformbaren Dichtkörper, durch welchen wenigstens ein Hohlraum hermetisch umschlossen ist, wobei der Hohlraum des Dichtkörpers durch ein darin befindliches Füllmaterial ausgefüllt ist und wobei das Volumen des Füllmaterials in einem ersten Temperaturbereich ein ausgeprägtes thermosensitives Expansionsverhalten gegenüber wenigstens einem zweiten Temperaturbereich aufweist.

Die Grundidee der Erfindung ist die Integration der Dichtfunktion und eines thermosensitiven Aktuators in ein gemeinsames Bauteil. Hierdurch wird letztendlich lediglich ein einziges Bauteil benötigt, welches von alleine bei Erreichen eines durch das Füllmaterial vorgegebenen Temperaturbereiches eine Volumenexpansion erfährt, wodurch letztendlich eine Dichtfunktion bewirkt ist. Durch dieses sehr einfache und
sichere Wirkprinzip ist in vorteilhafter Weise eine äußerst hohe Zuverlässigkeit gegeben, wie sie insbesondere in kerntechnischen Anlagen erforderlich ist.

Bei einem Einsatz als Notfalldichtung an den Hauptkühlmittelpumpen von Kernkraftwerken beispielsweise würde bei Versagen der Siegelwasserpumpen das heiße, aus dem Primärkreis austretende Wasser innerhalb kürzester Zeit ein Verformen des erfindungsgemäßen Dichtungsmittels bis hin zum Abdichten hervorrufen. Die Dichtwirkung wird anschließend durch den nun am Dichtkörper anliegenden Innendruck aus dem Primärkreis verstärkt, bis dieser entlastet und abgekühlt ist.

Der erste Temperaturbereich, in welchem das Füllmaterial des hüllenähnlichen Dichtkörpers ein Expansionsverhalten gegenüber einem zweitem Temperaturbereich aufweist, liegt in diesem Beispiel oberhalb des zweiten Temperaturbereiches, in welchem die normale Betriebstemperatur liegt. Es ist aber je nach Anwendungszweck auch denkbar, dass der erste Temperaturbereich umschlossen ist von einem unterhalb und einem oberhalb liegenden zweiten Temperaturbereich.

Je nach Gestaltung des Querschnitts des Dichtungsmittels kann ein darauf basierendes Dichtungssystem bei Überschreiten einer Expansionstemperatur des Füllmaterials, also bei Erreichen oder Verlassen des ersten Temperaturbereiches, einen Spalt schließen, öffnen oder auch nur den Anpressdruck ändern. Ein Dichtungsmittel, welches bei Normalbetrieb innerhalb des ersten Temperaturbereiches eingesetzt wird, kann bei dessen Unterschreiten sein Dichtverhalten sprunghaft ändern und somit zum Beispiel als Abblaseventil fungieren.

Gemäß einer besonders bevorzugten Ausgestaltungsvariante des erfindungsgemäßen Dichtungsmittels besteht das Füllmaterial zumindest überwiegend aus einem Thermostatwachs. Bei Thermostatwachsen tritt in einem schmalen Temperaturbereich oberhalb von deren jeweiliger Schmelztemperatur eine Volumenänderung von ca. 10 bis 20 % auf. Das Expansionsverhalten von Thermostatwachsen lässt sich durch Anpassung von deren jeweiliger Zusammensetzung in weiten Temperaturbereichen an die gegebenen Anforderungen anpassen. So ist beispielsweise der erste Temperaturbereich für das Füllmaterial eines Dichtungsmittels für eine Kühlmittelpumpe sicher oberhalb von deren normaler Betriebstemperatur und sicher unterhalb der Kühlmitteltemperatur zu wählen.

Gemäß einer weiterhin bevorzugten Erfindungsvariante ist der hüllenähnliche Dichtkörper zumindest überwiegend aus einem Kunststoff oder Metall gefertigt. Beide Materialien weisen das erforderliche Deformationsverhalten auf, wobei trotz gegebenenfalls erfolgter Verformung unter den herrschenden Einsatzbedingungen eine hermetische Dichtheit der Hohlräume gegeben ist, so dass kein Füllmaterial austreten kann.

Die erfindungsgemäße Aufgabe wird auch gelöst durch ein Dichtungssystem, umfassend
- ein erstes und ein zweites Bauteil, welche in einem gemeinsamen Abdichtbereich durch einen Dichtspalt voneinander getrennt sind,
- wenigstens eine nutähnliche Vertiefung in wenigstens einem der beiden Bauteile, welche in den Dichtspalt) übergeht,
wobei in der nutähnlichen Vertiefung ein erfindungsgemäßes Dichtungsmittel angeordnet und derart ausgeprägt ist, dass zumindest in einem Teilbereich des ersten Temperaturbereiches das Dichtungsmittel derart expandiert ist, dass der Dichtspalt zwischen den beiden Bauteilen vollständig geschlossen ist.

Durch die Anordnung des Dichtungsmittels in einer nutähnlichen Vertiefung ist dieses zum einen sicher fixiert und eine Volumenexpansion erfolgt in Richtung des abzudichtenden Dichtspaltes, welcher dadurch verschließbar ist. Dieses Dichtprinzip kann bei verschiedenen Geometrien zum Einsatz kommen. Die gegeneinander abzudichtenden Bauteile können z.B. eine rotierende Welle in einem Gehäuse mit einem radial arbeitenden Dichtungsmittel sein. Ebenso kann das Dichtungsmittel axial zwischen einer rotierenden Platte und einem Gehäuse angeordnet sein. Eine weitere Ausführungsform ist ein Dichtungsmittel in einer Dichtfuge zwischen beweglichen oder unbeweglichen Bauteilen.

Entsprechend einer besonders bevorzugten Ausgestaltungsvariante des Dichtungssystems sind der Dichtkörper und der Abdichtbereich ringähnlich ausgeprägt. Dies eignet sich insbesondere zum Abdichten beispielsweise von Pumpenwellen gegenüber ihrem Gehäuse.

Durch die ausgeprägte Volumenänderung des Füllmaterials in einem bestimmten Temperaturbereich erfährt der Dichtkörper sowohl eine Volumenänderung als auch, je nach Gestaltung, eine Geometrieänderung. Das Verhalten des Dichtungssystems im ersten Temperaturbereich wird wesentlich vom Querschnittsprofil des Dichtkörpers und dem Querschnitt der nutähnlichen Vertiefung bestimmt.

Eine erfindungsgemäße Bauvariation besteht darin, dass der Dichtkörper ein rundes oder rechteckiges Querschnittsprofil aufweist, welches etwa auf den Querschnitt der nutähnlichen Vertiefung abgestimmt ist. Bei Erhöhung der Temperatur in den ersten Temperaturbereich hinein (bei Thermostatwachsen ist dies die Schmelztemperatur) erfolgt eine starke volumetrische Ausdehnung des Füllmaterials und damit auch der verformbaren Hülle des Dichtungsmittels. Durch den beengten Bauraum in der nutähnlichen Vertiefung kann sich das Dichtungsmittel nur in Richtung des Dichtspaltes, der beispielsweise eine Dicke von 1-3 mm aufweist, ausdehnen und diesen schließen.

Eine weitere Bauvariation des erfindungsgemäßen Dichtungssystems ist dadurch gekennzeichnet, dass der Dichtkörper ein mehrschenkliges Querschnittsprofil, insbesondere ein "C", "U", "V", "N" oder "W" Profil, aufweist. Mit zwei Schenkeln entspricht das Profil einem C-, U- bzw. V-Profil, bei drei Schenkeln einem N-Profil, bei vier Schenkeln einem W-Profil. Eine Mehrschenkligkeit des Querschnittsprofils ist insbesondere unter Berücksichtigung nachfolgender Erfindungsvariante von Vorteil.

Demgemäß weist das Dichtungsmittel über sein Querschnittsprofil mehrere voneinander getrennte und mit Füllmaterial ausgefüllte Hohlräume auf. Der Vorteil dieser Bauweise ist eine zusätzliche, verstärkte Geometrieänderung des Dichtungsmittels im temperatursensitiven ersten Bereich, die sich in einer gerichteten Verformung des Dichtungsmittels äußert. Dadurch ist das Dichtungsmittel zu größeren Verformungswegen bei kleinerem Bauraum imstande.

Gemäß einer weiteren erfindungsgemäßen Ausführungsform ist das erste Bauteil eine Welle einer Pumpe und das zweite Bauteil ein dazugehöriges Pumpengehäuse. Die Dichtung kann sowohl im/am Gehäuse als auch in/an der Welle angebracht werden.

Gemäß einer besonders bevorzugten Variante des erfindungsgemäßen Dichtungssystems ist die zuvor genannte Pumpe eine Kühlwasserpumpe im Primärkühlsystem eines Kernreaktors, wobei die Betriebstemperatur der Pumpenwelle unterhalb des ersten Temperaturbereichs des Füllmaterials liegt. Somit wird bei dem unwahrscheinlichen Ausfall der Siegelwasserpumpen der Dichtspalt automatisch abgedichtet und es kann kein Kühlmittel aus dem Primärkreislauf entweichen. Die Funktionsweise und entsprechenden Vorteile sind bereits zuvor erörtert worden.

Einer weiteren Erfindungsvariante folgend liegt die Betriebstemperatur einer Pumpenwelle, welche nicht Teil des primären Kühlkreislaufes ist, innerhalb des ersten Temperaturbereiches. Somit ist die Welle im normalen Betrieb abgedichtet und kann bei Unterschreiten des ersten Temperaturbereiches - beispielsweise bei einem Störfall - gleichzeitig als temperaturabhängiges Abblaseventil fungieren.

Dasselbe Dichtungsprinzip lässt sich erfindungsgemäß natürlich auch auf die Variante anwenden, dass das erste und zweite Bauteil starr gegeneinander angeordnet sind, wobei der Dichtspalt temperaturabhängig geschlossen, teilweise geöffnet oder geöffnet ist. Wie bereits erörtert ist ein derartiges thermosensitives Ventil aufgrund seines einfachen, robusten und zuverlässigen Aufbaus in besonderer Weise geeignet, in einer kerntechnischen Anlage verbaut zu sein.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: exemplarisch abzudichtende Bauteile,
- Fig. 2: ein erstes exemplarisches Dichtungssystem in erstem Zustand,
- Fig. 3: das erste exemplarisches Dichtungssystem in zweitem Zustand,
- Fig. 4: ein zweites exemplarisches Dichtungssystem,
- Fig. 5: ein drittes exemplarisches Dichtungssystem sowie
- Fig. 6: ein exemplarisches Dichtungsmittel.

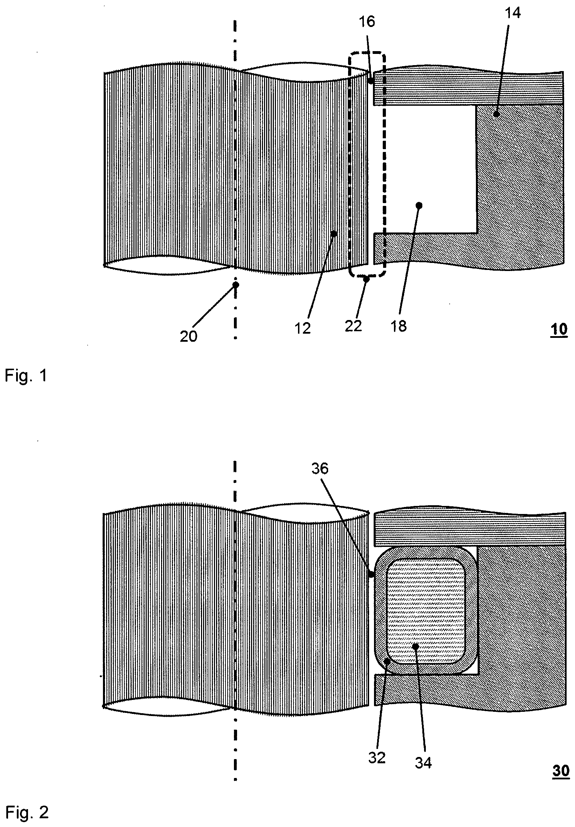

Fig. 1 zeigt in einer Darstellung 10 zwei exemplarisch gegeneinander abzudichtende Bauteile 12, 14 - eine Pumpenwelle und ein Pumpengehäuse. Die Pumpenwelle ist drehbar um eine Rotationsachse 20 gelagert, wobei zwischen Pumpenwelle und Pumpengehäuse ein ringähnlicher verlaufender Dichtspalt 16 vorgesehen ist. Im Pumpengehäuse ist eine ringähnlich umlaufende nutartige Vertiefung 18 vorgesehen, in welcher ein erfindungsgemäßes Dichtungsmittel anzuordnen ist. Mit der gestrichelten Linie ist ein Abdichtbereich 22 umrissen, in welchem durch ein Dichtungsmittel gegebenenfalls ein Abdichten des Dichtspaltes 16 erfolgt.

Fig. 2 zeigt in einer Darstellung 30 ein erstes exemplarisches Dichtungssystem in einem ersten Zustand. Dieses umfasst neben den in Fig. 1 gezeigten Komponenten ein ringähnliches Dichtungsmittel aus einem hüllenähnlichen Dichtkörper 32, dessen Hohlraum 34 mit einem Füllmaterial mit ausgeprägtem thermosensitivem Expansionsverhalten ausgefüllt ist. Das Dichtungsmittel ist in einem nicht-expandierten Zustand gezeigt, so dass der Dichtspalt 36 zur Pumpenwelle geöffnet ist.

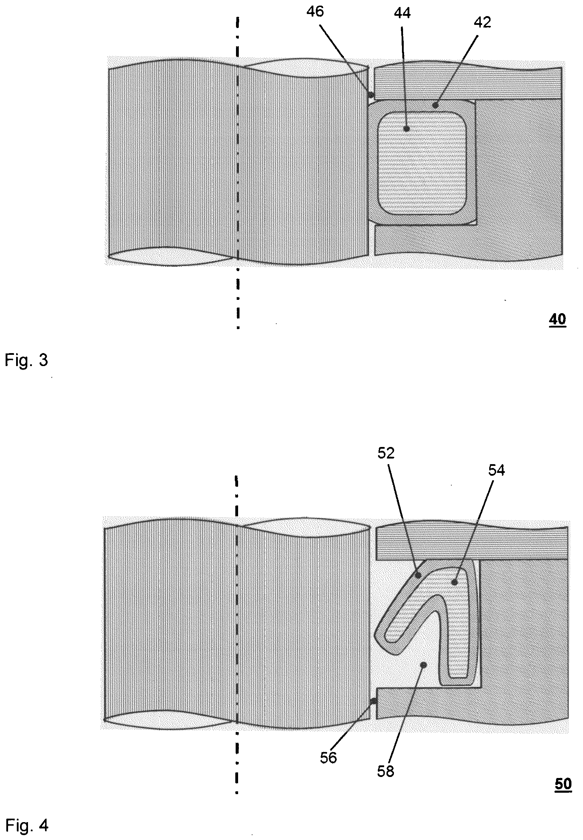

Fig. 3 zeigt in einer Darstellung das erste exemplarische Dichtungssystem in einem zweiten Zustand. Das Dichtungsmittel 42, 44 ist hier in einem expandierten Zustand gezeigt, so dass der Dichtspalt 46 zur Pumpenwelle geschlossen ist.

Fig. 4 zeigt in einer Darstellung 50 ein zweites exemplarisches Dichtungssystem. Dieses umfasst neben den in Fig. 1 gezeigten Komponenten ein ringähnliches Dichtungsmittel aus einer hüllenähnlichen Dichtkörper 52, dessen Hohlraum 54 mit einem Füllmaterial mit ausgeprägtem thermosensitivem Expansionsverhalten ausgefüllt ist und welcher in einer nutähnlichen Vertiefung 58 angeordnet ist, welche einen deutlich größeren Querschnitt aufweist als das Querschnittsprofil des Dichtungsmittels. Das Dichtungsmittel weist ein zweischenkliges Querschnittsprofil auf, wodurch eine Volumenexpansion des Füllmaterials zu einer verstärkten Geometrieänderung führt.

Das Dichtungsmittel ist in einem nicht-expandierten Zustand gezeigt, so dass der Dichtspalt 56 zur Pumpenwelle geöffnet ist.

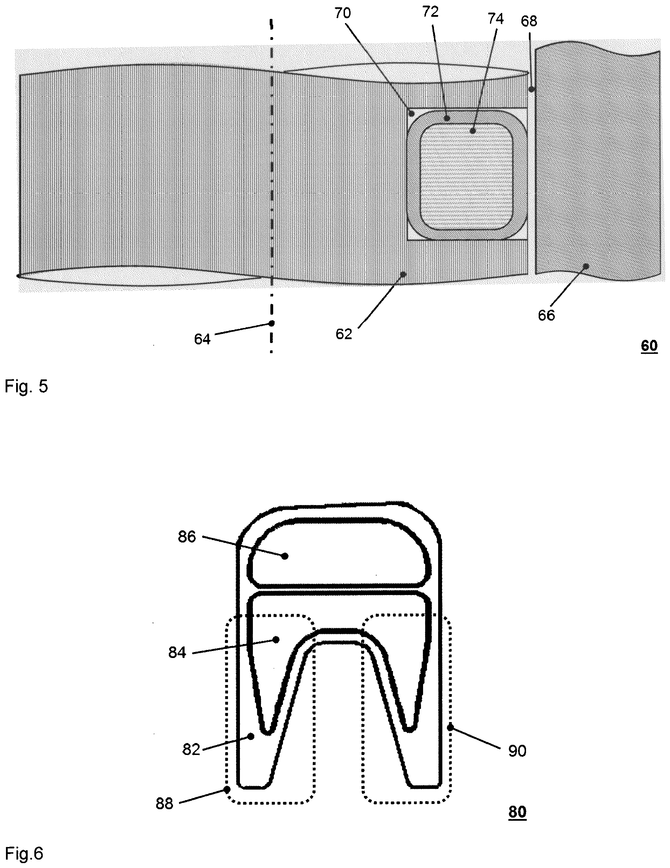

Fig. 5 zeigt in einer Darstellung 60 ein drittes exemplarisches Dichtungssystem mit einem ersten Bauteil 62 - einer Pumpenwelle welche drehbar um eine Rotationsachse 64 gelagert ist - und einem zweiten Bauteil 66 - einem Pumpengehäuse. Zwischen Pumpenwelle und Pumpengehäuse ist ein ringähnlicher Dichtspalt 68 vorgesehen, welcher bedarfsweise von einem Dichtungsmittel verschließbar ist. Das entsprechende Dichtungsmittel ist in einer umlaufenden nutähnlichen Vertiefung 70 der Pumpenwelle angeordnet und weist seinerseits einen hüllenähnlichen Hohlkörper 72 auf, in dessen Hohlraum 74 ein Füllmittel vorgesehen ist. Das Dichtungsmittel ist in einem nicht-expandierten Zustand gezeigt, so dass der Dichtspalt 68 zur Pumpenwelle geöffnet ist.

Fig. 6 zeigt ein exemplarisches Dichtungsmittel 80 in einer Querschnittsdarstellung. Das Dichtungsmittel 80 weist neben einem hüllenähnlichen Hohlkörper 82 zwei voneinander getrennte mit Füllmaterial gefüllte Hohlräume 84, 86 sowie zwei ausgeprägte gegenüber liegende Schenkelbereiche 88, 90 auf. Die Mehrschenkligkeit in Verbindung mit der Bauform mit mehreren Hohlräumen ermöglicht eine verstärkte Formänderung des Querschnittsprofils des Dichtungsmittels im ersten Temperaturbereich. Die Fig. zeigt den Zustand bei nicht-expandiertem Füllmaterial. Im Falle einer Expansion würden die als etwa parallel ausgerichtet gezeichneten Schenkelbereiche in ihren unteren Bereichen weiter voneinander abstehen und damit nicht mehr parallel ausgerichtet sein. Hierdurch ist eine erhöhte Dichtwirkung erreicht bzw. es kann ein größerer Dichtspalt geschlossen werden.

### Bezugszeichenliste

- 10: exemplarisch abzudichtende Bauteile
- 12: erstes Bauteil (Pumpenwelle)
- 14: zweites Bauteil (Pumpengehäuse)
- 16: Dichtspalt
- 18: exemplarische nutähnliche Vertiefung
- 20: Rotationsachse
- 22: Abdichtbereich
- 30: erstes exemplarisches Dichtungssystem in erstem Zustand
- 32: erster hüllenähnlicher Dichtkörper
- 34: Hohlraum von erstem Dichtkörper
- 36: offener Dichtspalt
- 40: erstes exemplarisches Dichtungssystem in zweitem Zustand
- 42: erster hüllenähnlicher Dichtkörper in expandiertem Zustand
- 44: Hohlraum von erstem Dichtkörper in expandiertem Zustand
- 46: geschlossener Dichtspalt
- 50: zweites exemplarisches Dichtungssystem
- 52: zweiter hüllenähnlicher Dichtkörper
- 54: Hohlraum von zweitem hüllenähnlichen Dichtkörper
- 56: Dichtspalt
- 58: exemplarische nutähnliche Vertiefung
- 60: exemplarisches drittes Dichtungssystem
- 62: erstes Bauteil (Pumpenwelle)
- 64: Rotationsachse
- 66: zweites Bauteil (Pumpengehäuse)
- 68: Dichtspalt
- 70: exemplarische nutähnliche Vertiefung
- 72: dritter hüllenähnlicher Hohlkörper
- 74: Hohlraum von drittem hüllenähnlichen Hohlkörper
- 80: exemplarisches Dichtungsmittel
- 82: hüllenähnlicher Hohlkörper von Dichtungsmittel
- 84: erster Hohlraum von Dichtungsmittel
- 86: zweiter Hohlraum von Dichtungsmittel
- 88: erster Schenkelbereich von Dichtungsmittel
- 90: zweiter Schenkelbereich von Dichtungsmittel

## Patentansprüche

1. Dichtungssystem (30, 50, 60), umfassend
• ein erstes (12, 62) und ein zweites (14, 66) Bauteil, welche in einem gemeinsamen Abdichtbereich durch einen Dichtspalt (16, 36, 56, 68) voneinander getrennt sind,
• wenigstens eine nutähnliche Vertiefung (18, 58, 70) in wenigstens einem der beiden Bauteile, welche in den Dichtspalt (16, 36, 56, 68) übergeht,
**dadurch gekennzeichnet,**
**dass** in der nutähnlichen Vertiefung (18, 58, 70) ein Dichtungsmittel (80) umfassend
• einen hüllenähnlichen verformbaren Dichtkörper (32, 52, 72, 82), durch welchen wenigstens ein Hohlraum (34, 54, 74, 84, 86) hermetisch umschlossen ist,
• wobei der Hohlraum (34, 54, 74, 84, 86) des Dichtkörpers (32, 52, 72, 82) durch ein darin befindliches Füllmaterial ausgefüllt ist,
• wobei das Volumen des Füllmaterials in einem ersten Temperaturbereich ein ausgeprägtes thermosensitives Expansionsverhalten gegenüber wenigstens einem zweiten Temperaturbereich aufweist,
angeordnet und derart ausgeprägt ist, dass durch das Dichtmittel (80) in einem nicht-expandierten Zustand der Dichtspalt (16, 36, 56, 68) geöffnet ist, dass das Dichtmittel (80) alleine bei Erreichen eines durch das Füllmaterial vorgegebenen Temperaturbereiches eine Volumenexpansion erfährt, und dass durch das Dichtmittel (80) in einem expandierten Zustand der Dichtspalt (16, 36, 56, 68) geschlossen ist.

2. *Dichtungssystem* nach Anspruch 1, **dadurch gekennzeichnet, dass** das Füllmaterial zumindest überwiegend aus einem Thermostatwachs besteht.

3. *Dichtungssystem* nach Anspruch 1 oder 2, **dadurch gekennzeichnet, dass** der hüllenähnliche Dichtkörper (32, 52, 72, 82) zumindest überwiegend aus einem Kunststoff oder Metall gefertigt ist.

4. Dichtungssystem nach *einem der vorherigen Ansprüche,* **dadurch gekennzeichnet, dass** der Dichtkörper (32, 52, 72, 82) und der Abdichtbereich ringähnlich ausgeprägt ist.

5. Dichtungssystem nach *einem der vorherigen Ansprüche,* **dadurch gekennzeichnet, dass** der Dichtkörper (32, 52, 72, 82) ein rundes oder rechteckiges Querschnittsprofil aufweist, welches etwa auf den Querschnitt der nutähnlichen Vertiefung (18, 58, 70) abgestimmt ist.

6. Dichtungssystem nach *einem der vorherigen Ansprüche,* **dadurch gekennzeichnet, dass** der Dichtkörper (32, 52, 72, 82) ein mehrschenkliges (88, 90) Querschnittsprofil, insbesondere ein "C", "U", "V", "N" oder "W" Profil, aufweist.

7. Dichtungssystem nach *einem der vorherigen Ansprüche,* **dadurch gekennzeichnet, dass** der Dichtkörper (32, 52, 72, 82) über sein Querschnittsprofil mehrere voneinander getrennte und mit Füllmaterial ausgefüllte Hohlräume (34, 54, 74, 84, 86) aufweist.

8. Dichtungssystem nach *einem der vorherigen Ansprüche,* **dadurch gekennzeichnet, dass** das erste Bauteil (12, 62) eine Welle einer Pumpe und das zweite Bauteil (14, 66) ein dazugehöriges Pumpengehäuse ist.

9. Dichtungssystem nach Anspruch 8, **dadurch gekennzeichnet, dass** die Pumpe eine Kühlwasserpumpe im Primärkühlsystem eines Kernreaktors ist, wobei die Betriebstemperatur der Pumpenwelle unterhalb des ersten Temperaturbereich des Füllmaterials liegt.

10. Dichtungssystem nach Anspruch 8, **dadurch gekennzeichnet, dass** die Betriebstemperatur der Pumpenwelle innerhalb des ersten Temperaturbereiches liegt.

11. Dichtungssystem nach einem der Ansprüche 1 bis 7, **dadurch gekennzeichnet, dass** das erste (12, 62) und zweite (14, 66) Bauteil starr gegeneinander angeordnet sind, wobei der Dichtspalt (16, 36, 56, 68) temperaturabhängig geschlossen, teilweise geöffnet oder geöffnet ist.

12. Dichtungssystem nach Anspruch 11, **dadurch gekennzeichnet, dass** dieses als thermosensitives Ventil in einer kerntechnischen Anlage verbaut ist.

## Claims

1. Sealing system (30, 50, 60), comprising
• a first component (12, 62) and a second component (14, 66) which are separated from one another by a sealing gap (16, 36, 56, 68) in a common sealing region,
• at least one groove-like depression (18, 58, 70) in at least one of the two components, which depression merges into the sealing gap (16, 36, 56, 68),
**characterized**
**in that** a sealing means (80) comprising:
• a sleeve-like deformable sealing body (32, 52, 72, 82) by means of which at least one cavity (34, 54, 74, 84, 86) is hermetically enclosed,
• wherein the cavity (34, 54, 74, 84, 86) of the sealing body (32, 52, 72, 82) is filled by a filling material contained therein,
• wherein the volume of the filling material in a first temperature range has a pronounced thermosensitive expansion behaviour with respect to at least one second temperature range,
is arranged in the groove-like depression (18, 58, 70) and embodied in such a way that the sealing gap (16, 36, 56, 68) is opened by the sealing means (80) in a non-expanded state, that the sealing means (80) experiences a volume expansion merely on reaching a temperature range predetermined by the filling material, and that the sealing gap (16, 36, 56, 68) is closed by the sealing means (80) in an expanded state.

2. Sealing system according to Claim 1, **characterized in that** the filling material consists at least for the most part of a thermostatic wax.

3. Sealing system according to Claim 1 or 2, **characterized in that** the sleeve-like sealing body (32, 52, 72, 82) is produced at least for the most part from a plastic or metal.

4. Sealing system according to one of the preceding claims, **characterized in that** the sealing body (32, 52, 72, 82) and the sealing region are embodied in a ring-like manner.

5. Sealing system according to one of the preceding claims, **characterized in that** the sealing body (32, 52, 72, 82) has a round or rectangular cross-sectional profile which is tailored approximately to the cross section of the groove-like depression (18, 58, 70).

6. Sealing system according to one of the preceding claims, **characterized in that** the sealing body (32, 52, 72, 82) has a multi-legged (88, 90) cross-sectional profile, in particular a "C", "U", "V", "N" or "W" profile.

7. Sealing system according to one of the preceding claims, **characterized in that** the sealing body (32, 52, 72, 82) has over its cross-sectional profile a plurality of cavities (34, 54, 74, 84, 86) which are separated from one another and filled with filling material.

8. Sealing system according to one of the preceding claims, **characterized in that** the first component (12, 62) is a shaft of a pump and the second component (14, 66) is an associated pump housing.

9. Sealing system according to Claim 8, **characterized in that** the pump is a cooling water pump in the primary cooling system of a nuclear reactor, wherein the operating temperature of the pump shaft lies below the first temperature range of the filling material.

10. Sealing system according to Claim 8, **characterized in that** the operating temperature of the pump shaft lies within the first temperature range.

11. Sealing system according to one of Claims 1 to 7, **characterized in that** the first component (12, 62) and second component (14, 66) are arranged rigidly with respect to one another, wherein the sealing gap (16, 36, 56, 68) is closed, partially opened or opened dependent on temperature.

12. Sealing system according to Claim 11, **characterized in that** it is installed as a thermosensitive valve in a nuclear plant.

## Revendications

1. Système d'étanchéification (30, 50, 60), comprenant:
• un premier (12, 62) et un deuxième (14, 66) composants, qui sont séparés l'un de l'autre par une fente d'étanchéité (16, 36, 56, 68) dans une zone d'étanchéité commune,
• au moins un creux en forme de rainure (18, 58, 70) dans au moins un des deux composants, qui se prolonge dans la fente d'étanchéité (16, 36, 56, 68),
**caractérisé en ce qu'**un moyen d'étanchéification (80) comprenant
• un corps d'étanchéité déformable en forme de gaine (32, 52, 72, 82), par lequel au moins une cavité (34, 54, 74, 84, 86) est hermétiquement entourée,
• dans lequel la cavité (34, 54, 74, 84, 86) du corps d'étanchéité (32, 52, 72, 82) est remplie avec une matière de remplissage se trouvant dans celle-ci,
• dans lequel le volume de la matière de remplissage présente dans une première plage de température un comportement d'expansion thermosensible marqué par rapport à au moins une deuxième plage de température,
est disposé dans le creux en forme de rainure (18, 58, 70) et est configuré de telle manière que la fente d'étanchéité (16, 36, 56, 68) soit fermée par le moyen d'étanchéification (80) dans un état non expansé, que le moyen d'étanchéification (80) subisse une expansion de volume uniquement en atteignant une plage de température prédéterminée par la matière de remplissage, et que la fente d'étanchéité (16, 36, 56, 68) soit fermée par le moyen d'étanchéification (80) dans un état expansé.

2. Système d'étanchéification selon la revendication 1, **caractérisé en ce que** la matière de remplissage se compose au moins principalement d'une cire thermostatique.

3. Système d'étanchéification selon la revendication 1 ou 2, **caractérisé en ce que** le corps d'étanchéité en forme de gaine (32, 52, 72, 82) est fabriqué au moins principalement en une matière plastique ou un métal.

4. Système d'étanchéification selon l'une quelconque des revendications précédentes, **caractérisé en ce que** le corps d'étanchéité (32, 52, 72, 82) et la zone d'étanchéité sont configurés sous forme annulaire.

5. Système d'étanchéification selon l'une quelconque des revendications précédentes, **caractérisé en ce que** le corps d'étanchéité (32, 52, 72, 82) présente un profil de section transversale rond ou rectangulaire, qui est sensiblement accordé à la section transversale du creux en forme de rainure (18, 58, 70).

6. Système d'étanchéification selon l'une quelconque des revendications précédentes, **caractérisé en ce que** le corps d'étanchéité (32, 52, 72, 82) présente un profil de section transversale à plusieurs branches (88, 90), en particulier un profil en forme de "C", "U", "V", "N" ou "W".

7. Système d'étanchéification selon l'une quelconque des revendications précédentes, **caractérisé en ce que** le corps d'étanchéité (32, 52, 72, 82) présente sur son profil de section transversale plusieurs cavités (34, 54, 74, 84, 86) séparées l'une de l'autre et remplies de matière de remplissage.

8. Système d'étanchéification selon l'une quelconque des revendications précédentes, **caractérisé en ce que** le premier composant (12, 62) est un arbre d'une pompe et le deuxième composant (14, 66) est un corps de pompe correspondant.

9. Système d'étanchéification selon la revendication 8, **caractérisé en ce que** la pompe est une pompe à eau de refroidissement dans le système de refroidissement primaire d'un réacteur nucléaire, dans lequel la température de fonctionnement de l'arbre de pompe se situe en dessous de la première plage de température de la matière de remplissage.

10. Système d'étanchéification selon la revendication 8, **caractérisé en ce que** la température de fonctionnement de l'arbre de pompe se situe à l'intérieur de la première plage de température.

11. Système d'étanchéification selon l'une quelconque des revendications 1 à 7, **caractérisé en ce que** le premier (12, 62) et le deuxième (14, 66) composants sont disposés de façon rigide l'un par rapport à l'autre, dans lequel la fente d'étanchéité (16, 36, 56, 68) est fermée, partiellement ouverte ou ouverte en fonction de la température.

12. Système d'étanchéification selon la revendication 11, **caractérisé en ce que** celui-ci est monté comme soupape thermosensible dans une installation technique nucléaire.
